(19) Europäisches Patentamt / European Patent Office / Office européen des brevets

(11) **EP 2 617 763 B1**

(12) **EUROPEAN PATENT SPECIFICATION**

(45) Date of publication and mention of the grant of the patent:
**13.12.2017 Bulletin 2017/50**

(51) Int Cl.:
*C08L 9/00* (2006.01)  *B60C 1/00* (2006.01)
*C08K 3/04* (2006.01)  *C08K 3/06* (2006.01)
*C08K 3/36* (2006.01)  *C08K 5/098* (2006.01)
*C08K 5/3492* (2006.01)  *C08L 7/00* (2006.01)
*C08L 9/06* (2006.01)  *C08L 61/00* (2006.01)
*B60C 9/18* (2006.01)  *C08L 61/12* (2006.01)

(21) Application number: **11834418.3**

(22) Date of filing: **20.10.2011**

(86) International application number:
**PCT/JP2011/074120**

(87) International publication number:
**WO 2012/053579 (26.04.2012 Gazette 2012/17)**

(54) **RUBBER COMPOSITION FOR BAND TOPPING, RUBBER COMPOSITION FOR BREAKER EDGE STRIP, AND PNEUMATIC TIRE**

KAUTSCHUKZUSAMMENSETZUNG FÜR EINE BANDBESCHICHTUNG, KAUTSCHUKZUSAMMENSETZUNG FÜR EINEN BRECHERRANDSTREIFEN UND LUFTREIFEN DAMIT

COMPOSITION DE CAOUTCHOUC POUR REVÊTEMENT DE BANDAGE, COMPOSITION DE CAOUTCHOUC POUR BORDURE DE NAPPE-SOMMET ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2010 JP 2010236746**

(43) Date of publication of application:
**24.07.2013 Bulletin 2013/30**

(73) Proprietor: **Sumitomo Rubber Industries, Ltd.**
**Kobe-shi, Hyogo 651-0072 (JP)**

(72) Inventor: **MIYAZAKI Tatsuya**
**Kobe-shi**
**Hyogo 651-0072 (JP)**

(74) Representative: **Manitz Finsterwald Patentanwälte PartmbB**
**Martin-Greif-Strasse 1**
**80336 München (DE)**

(56) References cited:
EP-A1- 2 072 280  EP-A1- 2 153 965
EP-A2- 1 439 204  EP-A2- 2 141 199
JP-A- 4 356 205  JP-A- 5 156 091
JP-A- 10 036 488  JP-A- 2003 094 918
JP-A- 2004 067 027  JP-A- 2004 217 817
JP-A- 2005 272 815  JP-A- 2008 031 427
JP-A- 2009 007 549  JP-A- 2010 090 291
JP-A- 2010 090 291  JP-A- 2010 111 776
US-A1- 2005 192 386  US-A1- 2006 102 269
US-A1- 2008 300 368  US-A1- 2010 024 947
US-A1- 2010 200 141

**Description**

TECHNICAL FIELD

The present invention relates to a pneumatic tire comprising a band made of a rubber composition for a band topping and/or a breaker edge strip made of a rubber composition for a breaker edge strip.

BACKGROUND ART

In the automobile society these days, various measures have been taken to satisfy the demand for tires having good abrasion resistance and low rolling resistance (LRR). However, since the improvement in abrasion resistance of tires prolongs the usable life of the tires, the durability (internal damage) of the tires is then a matter of concern. Breaker edge looseness (BEL) is a typical example of internal damage.

Conventionally, in order to enhance the durability of a tread portion, the following have been used: a band topping rubber (band rubber) and a circumferential band cord, which are located on the outside of a breaker rubber, when viewed in the tire radial direction, and in contact with the breaker rubber to suppress movement of the breaker rubber; and a breaker edge strip rubber which is located at an edge portion of a breaker to reduce movement of the breaker and thereby reduce strain at the breaker end.

However, when the band topping rubber or the breaker edge strip rubber undergoes oxidative degradation, its hardness increases and thus the elongation at break is reduced. Due to these changes in the rubber properties, a crack formed at an end of a breaker propagates to the breaker edge strip rubber and further grows to between the breaker rubber and the band rubber, thereby causing BEL. Such oxidative degradation of a band topping rubber or a breaker edge strip rubber is likely to occur particularly when the tire is used in high-temperature regions.

A conventional band includes Nylon 66 cord which has excellent adhesion to rubber, together with a band topping rubber. Recently, the use of an inexpensive polyester (PE) cord, a polyethylenenaphthalate (PEN) cord which is excellent in terms of noise (low noise), or the like has been considered. However, since BEL is more likely to occur when these cords are used than when a conventional Nylon 66 cord is used, the full-scale practical use of these cords has still not been done.

In order to suppress the occurrence of BEL, a technique of increasing the rubber thickness between a breaker and a band is known. This technique, however, causes the rubbers to flow at an initial stage of vulcanization and thus it is difficult to maintain the sufficient rubber thickness between the breaker and the band. Especially in the case of using PEN cord which has a small elongation under an initial strain, the rubber thickness is less likely to be maintained.

Moreover, as another technique for suppressing the occurrence of BEL, a method may be considered in which the air permeability of an inner liner is improved so as to reduce the amount of air leakage from inside the tire through the rubber layer to the outside of the tire (into the atmosphere), or in other words to reduce oxygen supply to a band topping rubber and a breaker edge strip rubber to suppress oxidative degradation of the rubbers. However, there is a limit to the reduction in the air pressure loss of a tire and thus oxidative degradation of the rubbers cannot be sufficiently suppressed.

Patent Literature 1 discloses a method for improving tensile properties by adding an adhesive resin together with sulfur. Notwithstanding there still remains room for improvement in terms of suppressing the occurrence of BEL.

US 2010/0024947 A1 relates to a strip layer of a tire located between the breaker and ply made of a rubber composition, which includes for example a rubber component including 100 % by weight of natural rubber, 55 phr of carbon black, 10 phr of silica, 3.0 phr of pure sulfur, 1.5 phr of modified resorcinol resin and 2.0 phr of hexamethylol melamine pentamethyl ether.

EP 2 141 109 A2 discloses a rubber composition including for instance a rubber component including 60 % by weight of natural rubber, 36 phr of carbon black, 10 phr of silica, 1.0 phr of modified resorcin resin, 1. 5 phr of hexamethylol melamine pentamethyl ether and 2.5 phr of sulfur.

EP 1 439 204 A2 discloses a rubber composition, which includes 5 phr sulfur and US 2008/0300368 A1 discloses a rubber composition containing 7 phr sulfur.

US 2005/0192386 A1 discloses a rubber composition including a rubber component consisting of natural rubber, 65 phr of carbon black, 1. 5 phr of cobalt stearate, 3.0 phr of sulfur, 2.0 phr of modified resorcin resin and 1.5 phr of hexamethylol melamine pentamethyl ether.

At present, as mentioned above, a band topping rubber or a breaker edge strip rubber which can suppress the occurrence of BEL, or in other words is excellent in durability, has not been realized.

CITATION LIST

PATENT LITERATURE

Patent Literature 1: JP 2006-28684 A

SUMMARY OF INVENTION

TECHNICAL PROBLEM

The present invention aims to solve the above problems and to provide a rubber composition for a band topping and a rubber composition for a breaker edge strip, each of which can suppress the occurrence of BEL, or in other words is excellent in durability, and also aims to provide a pneumatic tire including a band and/or a breaker edge strip each formed from the corresponding rubber composition.

SOLUTION TO PROBLEM

The present invention relates to a
A pneumatic tire comprising at least one of:

i) a band formed from a rubber composition for a band topping, comprising, per 100 parts by mass of a rubber component containing not less than 50% by mass of an isoprene-based rubber,
1.5 to 2.9 parts by mass of sulfur,
1 to 3 parts by mass of at least one first compound selected from the group consisting of resorcinol resins, modified resorcinol resins, cresol resins, modified cresol resins, phenolic resins, and modified phenolic resins,
0.7 to 3 parts by mass of at least one second compound selected from the group consisting of partial condensates of hexamethoxymethylol melamine and partial condensates of hexamethylol melamine pentamethyl ether,
5 to 17 parts by mass of silica, and
10 to 55 parts by mass of a carbon black having a nitrogen adsorption specific surface area of 38 to 125 $m^2$/g, and
ii) a breaker edge strip formed from a rubber composition for a breaker edge strip, comprising, per 100 parts by mass of a rubber component containing not less than 50% by mass of an isoprene-based rubber,
2.0 to 3.99 parts by mass of sulfur,
0.6 to 4 parts by mass of at least one first compound selected from the group consisting of resorcinol resins, modified resorcinol resins, cresol resins, modified cresol resins, phenolic resins, and modified phenolic resins,
0.6 to 4 parts by mass of at least one second compound selected from the group consisting of partial condensates of hexamethoxymethylol melamine and partial condensates of hexamethylol melamine pentamethyl ether, and
0.05 to 0.30 parts by mass of a cobalt salt of an organic acid calculated as cobalt.

Preferably, the pneumatic tire comprises a band formed from a rubber composition for a band topping, wherein the rubber composition for the band topping includes a rubber component preferably containing styrene-butadiene rubber.
Preferably, the pneumatic tire comprises a breaker edge strip, wherein the rubber composition for the breaker edge strip preferably includes silica.
More preferably, the rubber composition of the breaker edge strip of the pneumatic tire has a total content of silica and carbon black of 50 to 70 parts by mass per 100 parts by mass of the rubber component.

ADVANTAGEOUS EFFECTS OF INVENTION

The present invention provides a pneumatic tire with a band made of a rubber composition for a band topping, including, in predetermined amounts relative to a rubber component containing a predetermined amount of an isoprene-based rubber: sulfur; at least one first compound selected from the group consisting of resorcinol resins, modified resorcinol resins, cresol resins, modified cresol resins, phenolic resins, and modified phenolic resins; at least one second compound selected from the group consisting of partial condensates of hexamethoxymethylol melamine and partial condensates of hexamethylol melamine pentamethyl ether; silica; and a carbon black having a certain nitrogen adsorption specific surface area. The present invention also provides a pneumatic tire with a breaker edge strip made of a rubber composition for a breaker edge strip, including, in predetermined amounts relative to a rubber component containing a predetermined amount of an isoprene-based rubber: sulfur; at least one first compound selected from the group consisting of resorcinol resins, modified resorcinol resins, cresol resins, modified cresol resins, phenolic resins, and modified phenolic resins; at least one second compound selected from the group consisting of partial condensates of hexamethoxymethylol melamine and partial condensates of hexamethylol melamine pentamethyl ether; and a cobalt salt of an organic acid. Accordingly, the rubber compositions of the pneumatic tires of the present invention can suppress the occurrence of BEL (or in other words is excellent in durability). Therefore, the use of the rubber compositions for a band and/or a breaker edge strip in a tire can provide a pneumatic tire with excellent durability.

BRIEF DESCRIPTION OF DRAWINGS

Fig. 1 shows a cross-sectional view illustrating a part of a pneumatic tire according to one embodiment of the present invention.
Fig. 2 shows a cross-sectional view illustrating a part of a pneumatic tire according to one embodiment of the present invention.
Fig. 3 shows a cross-sectional view illustrating a part of a pneumatic tire according to one embodiment of the present invention.
Fig. 4 shows a cross-sectional view illustrating a part of a pneumatic tire according to one embodiment of the present invention.

DESCRIPTION OF EMBODIMENTS

The rubber composition for a band topping of the pneumatic tire according to the present invention includes, in predetermined amounts relative to a rubber component containing a predetermined amount of an isoprene-based rubber: sulfur; at least one first compound selected from the group consisting of resorcinol resins, modified resorcinol resins, cresol resins, modified cresol resins, phenolic resins, and modified phenolic resins; at least one second compound selected from the group consisting of partial condensates of hexamethoxymethylol melamine and partial condensates of hexamethylol melamine pentamethyl ether; silica; and a carbon black having a certain nitrogen adsorption specific surface area. The use of such a rubber composition allows improvement in the complex elastic modulus (E*), the low heat build-up, and the elongation at break while maintaining the processability (sheeting processability), and can also suppress the occurrence of BEL, thereby providing a pneumatic tire that is excellent in fuel economy and durability.
It should be noted that higher complex elastic modulus (E*), higher elongation at break, and lower heat build-up (tan δ) each contribute to greater durability. However, since the E* and the elongation at break have a trade-off relationship, it is difficult to enhance the two properties together. Despite this, in the rubber composition for a band topping according to the present invention, the E* and the elongation at break can be enhanced together and therefore both can be achieved at high levels.
The rubber composition of the breaker edge strip of the pneumatic tire according to the present invention includes, in predetermined amounts relative to a rubber component containing a predetermined amount of an isoprene-based rubber: sulfur; at least one first compound selected from the group consisting of resorcinol resins, modified resorcinol resins, cresol resins, modified cresol resins, phenolic resins, and modified phenolic resins; at least one second compound selected from the group consisting of partial condensates of hexamethoxymethylol melamine and partial condensates of hexamethylol melamine pentamethyl ether; and a cobalt salt of an organic acid. The use of such a rubber composition allows improvement in the elongation at break (in the fresh state) and the elongation at break (after thermal oxidative degradation) while maintaining the hardness, the adhesion to cord, and the processability (sheeting processability), and can also suppress the occurrence of BEL, thereby providing a pneumatic tire with excellent durability. It should be noted that although a rubber composition for a breaker edge strip is not a topping rubber (rubber for covering cord), considering that the breaker edge strip rubber is in contact with a cord such as steel cord in a breaker in an area where the breaker edge strip is in contact with the breaker, the rubber composition for a breaker edge strip is required to have excellent adhesion to cord.
It should also be noted that higher hardness (Hs) and higher elongation at break each contribute to greater durability. However, since the hardness and the elongation at break have a trade-off relationship, it is difficult to enhance the two properties together. Despite this, in the rubber composition for a breaker edge strip according to the present invention, both the hardness and the high elongation at break can be achieved at high levels.
Moreover, when the rubber composition for a band topping and/or the rubber composition for a breaker edge strip of the pneumatic tire according to the present invention are/is used for a band and/or a breaker edge strip in a tire, the occurrence of BEL can be suppressed and thus the durability of the pneumatic tire can be enhanced. Therefore, cords other than Nylon 66 cord, such as polyester (PE) cord and polyethylenenaphthalate (PEN) cord can be used as cords for bands, without worrying about the durability of the pneumatic tire. This increases the number of kinds of cords usable as cords for bands. Accordingly, for example, the use of PE cord reduces the cost, or the use of PEN cord enables lower noise.

(Rubber component)

The rubber composition for a band topping and the rubber composition for a breaker edge strip of the pneumatic tire according to the present invention (hereinafter, they are also collectively referred to as the rubber compositions of the present invention) each contain a predetermined amount of an isoprene-based rubber.

Examples of the isoprene-based rubber include isoprene rubber (IR), natural rubber (NR), and modified natural rubber. Examples of NR include deproteinized natural rubber (DPNR) and highly purified natural rubber (HPNR). Examples of modified natural rubber include epoxidized natural rubber (ENR), hydrogenated natural rubber (HNR), and grafted natural rubber. Specific examples of NR include those generally used in the tire industry, such as SIR20, RSS#3, and TSR20. NR and IR are preferred, and NR is more preferred, among the examples.

In the rubber composition for a band topping, the rubber component contains an isoprene-based rubber in an amount of not less than 50% by mass, preferably not less than 60% by mass, and more preferably not less than 70% by mass, based on 100% by mass of the rubber component. If the isoprene-based rubber content is less than 50% by mass, the elongation at break decreases, and the durability is lowered. In addition, the fuel economy decreases.

The isoprene-based rubber content is preferably not more than 90% by mass, and more preferably not more than 85% by mass, based on 100% by mass of the rubber component. The isoprene-based rubber content of more than 90% by mass may lead to greater reversion.

In the rubber composition for a breaker edge strip, the rubber component contains an isoprene-based rubber in an amount of not less than 50% by mass, preferably not less than 70% by mass, more preferably not less than 90% by mass, and particularly preferably 100% by mass, based on 100% by mass of the rubber component. If the isoprene-based rubber content is less than 50% by mass, the elongation at break decreases, and the durability is lowered. In addition, the fuel economy decreases.

Examples of materials usable as the rubber component other than isoprene-based rubbers include butadiene rubber (BR), styrene-butadiene rubber (SBR), styrene-isoprene-butadiene rubber (SIBR), isoprene rubber (IR), ethylene-propylene-diene rubber (EPDM), chloroprene rubber (CR), and acrylonitrile-butadiene rubber (NBR). Each of these rubber materials may be used alone, or two or more of them may be used in combination. Among the examples, for the rubber composition for a band topping, SBR and BR are preferred, and SBR is more preferred, in terms of reversion resistance, thermal resistance, and crack growth resistance.

The BR is not particularly limited, and examples thereof include those generally used in the tire industry, namely, for example, BR with a high cis content such as BR1220 produced by Zeon Corporation, and BR150B produced by Ube Industries, Ltd.; and BR containing 1,2-syndiotactic polybutadiene crystals (SPB) such as VCR412 and VCR617 produced by Ube Industries, Ltd. Tin-modified butadiene rubber (tin-modified BR) obtained by modification by a tin compound may also be used.

The SBR is not particularly limited, and examples thereof include emulsion-polymerized styrene-butadiene rubber (E-SBR), solution-polymerized styrene-butadiene rubber (S-SBR), and modified SBR obtained by modification by, for example, 3-aminopropyldimethylmethoxysilane. Especially, E-SBR is preferred because it contains a large amount of high molecular weight polymer particles, and has excellent elongation at break.

In the rubber composition for a band topping, the rubber component preferably contains SBR in an amount of not less than 10% by mass, more preferably not less than 15% by mass, based on 100% by mass of the rubber component. The SBR content of less than 10% by mass may lead to greater reversion. The SBR content is preferably not more than 50% by mass, more preferably not more than 40% by mass, and still more preferably not more than 30% by mass. If the SBR content exceeds 50% by mass, the elongation at break may decrease.

(Sulfur)

In the rubber composition for a band topping, the sulfur content is not less than 1.5 parts by mass, preferably not less than 2.0 parts by mass, per 100 parts by mass of the rubber component. The sulfur content of less than 1.5 parts by mass leads to a reduced adhesion to cord, causing separation between cord and rubber. In addition, it leads to reduction in the complex elastic modulus and the elongation at break, and therefore the durability is lowered. Moreover, the fuel economy is also reduced. The sulfur content is not more than 2.9 parts by mass, preferably not more than 2.5 parts by mass. If the sulfur content exceeds 2.9 parts by mass, the crosslink density increases due to oxidation deterioration; and the elongation at break decreases, and therefore the durability is lowered.

In the rubber composition for a breaker edge strip, the sulfur content is not less than 2.0 parts by mass, preferably not less than 2.5 parts by mass, per 100 parts by mass of the rubber component. The sulfur content of less than 2.0 parts by mass leads to a reduced adhesion to cord, causing separation between cord and rubber. As a result, the durability is lowered. In addition, the processability (sheeting processability) is deteriorated as well. The sulfur content is not more than 3.99 parts by mass, preferably not more than 3.4 parts by mass, and more preferably not more than 3.1 parts by mass. If the sulfur content exceeds 3.99 parts by mass, the crosslink density increases due to oxidation deterioration; and the elongation at break (in the fresh state and after thermal oxidative degradation) decreases, and therefore the durability is lowered. In addition, the adhesion and the processability (sheeting processability) are deteriorated as well. The sulfur content in the above range contributes to excellent adhesion and elongation at break (after thermal oxidative degradation).

(Resin)

The rubber compositions of the pneumatic tire of the present invention each include at least one compound (resin) selected from the group consisting of resorcinol resins (condensates), modified resorcinol resins (condensates), cresol resins, modified cresol resins, phenolic resins, and modified phenolic resins. Each of these compounds may be used alone, or two or more of them may be used in combination.

The rubber composition includes at least one of the compounds in order to enhance the adhesion to cord, the elongation at break and the complex elastic modulus.

Especially in the case of the rubber composition for a band topping, resorcinol resins, modified resorcinol resins, and modified cresol resins are preferred, and modified resorcinol resins are more preferred.

Moreover, in the case of the rubber composition for a breaker edge strip, modified resorcinol resins, modified cresol resins, and modified phenolic resins are preferred, and modified resorcinol resins are more preferred.

Examples of the resorcinol resins include resorcinol-formaldehyde condensates. Specific examples thereof include Resorcinols produced by Sumitomo Chemical Co., Ltd. Examples of the modified resorcinol resins include resorcinol resins in which part of repeating units is alkylated. Specific examples thereof include Penacolite resins B-18-S and B-20 produced by Indspec Chemical Corporation, Sumikanol 620 produced by Taoka Chemical Co., Ltd. , R-6 produced by Uniroyal, SRF 1501 produced by Schenectady Chemicals, and Arofene 7209 produced by the Ashland Inc.

Examples of the cresol resins include cresol-formaldehyde condensates. Examples of the modified cresol resins include cresol resins whose terminal methyl group is modified into a hydroxyl group, and cresol resins in which part of repeating units is alkylated. Specific examples include Sumikanol 610 produced by Taoka Chemical Co. , Ltd. , and PR-X11061 produced by Sumitomo Bakelite Co. , Ltd (a cresol resin synthesized from cresol components (monomers) including o-cresol, m-cresol, and p-cresol, in which the amount of free cresols (the content of free monomers) remaining in the cresol resin is as small as 0.6% by mass based on 100% by mass of the cresol resin).

Examples of the phenolic resins include phenol-formaldehyde condensates. Examples of the modified phenolic resins include phenolic resins modified with cashew oil, tall oil, linseed oil, various animal or vegetable oils, unsaturated fatty acids, rosin, alkylbenzene resins, aniline, melamine, and the like.

In the rubber composition for a band topping, the content of the resins is not less than 1 part by mass, preferably not less than 1.2 parts by mass, per 100 parts by mass of the rubber component. If the content is less than 1 part by mass, the complex elastic modulus decreases, and therefore the durability is lowered. The content of the resins is not more than 3 parts by mass, preferably not more than 2.5 parts by mass. If the content exceeds 3 parts by mass, the resin (s) are less dispersed, and therefore the fuel economy, the elongation at break, the processability (sheeting processability), and the durability are deteriorated.

In the rubber composition for a breaker edge strip, the content of the resins is not less than 0.6 parts by mass, preferably not less than 0.8 parts by mass, per 100 parts by mass of the rubber component. If the content is less than 0.6 parts by mass, the elongation at break (after thermal oxidative degradation) and the adhesion decrease, and therefore the durability is lowered. The content of the resins is not more than 4 parts by mass, preferably not more than 3 parts by mass. If the content exceeds 4 parts by mass, the resin(s) are less dispersed, and therefore the elongation at break (in the fresh state and after thermal oxidative degradation) decreases, and in turn, the durability is lowered.

(Methylene donor)

The rubber compositions of the pneumatic tire of the present invention each include at least one compound (methylene donor) selected from the group consisting of partial condensates of hexamethoxymethylol melamine (HMMM) and partial condensates of hexamethylol melamine pentamethyl ether (HMMPME). Each of these compounds may be used alone, or two or more of them may be used in combination.

The present invention uses a partial condensate of HMMM and/or a partial condensate of HMMPME. This reinforces the adhesion between cord and rubber. Among the above examples, partial condensates of HMMPME are preferred.

In contrast, when hexamethylenetetramine (HMT) is used, the adhesion to cord is not sufficient, thereby leading to a reduced durability.

In the rubber composition for a band topping, the content of the methylene donors is not less than 0.7 parts by mass, preferably not less than 0.8 parts by mass, per 100 parts by mass of the rubber component. If the content is less than 0.7 parts by mass, the amount of methylene supply is small and thus the complex elastic modulus (E*) may decrease. The content of the methylene donors is not more than 3 parts by mass, preferably not more than 2.5 parts by mass. If the content exceeds 3 parts by mass, the elongation at break (after thermal oxidative degradation) may decrease.

In the rubber composition for a breaker edge strip, the content of the methylene donors is not less than 0.6 parts by mass, preferably not less than 0.8 parts by mass, per 100 parts by mass of the rubber component. If the content is less than 0.6 parts by mass, the adhesion decreases, and therefore the durability is lowered. The content of the methylene donors is not more than 4 parts by mass, preferably not more than 3 parts by mass. If the content exceeds 4 parts by mass, the elongation at break (in the fresh state and after thermal oxidative degradation) decreases, and therefore the durability is lowered. In addition, the processability (sheeting processability) is deteriorated as well.

(Silica)

The rubber composition for a band topping includes silica, which enhances the elongation at break and the adhesion to cord.

Also, the rubber composition for a breaker edge strip preferably includes silica to achieve the same effect as above.

The silica is not particularly limited, and examples thereof include dry silica (silicic anhydride) and wet silica (hydrous silicic acid). Wet silica is preferred because it contains more silanol groups.

The nitrogen adsorption specific surface area ($N_2SA$) of silica is preferably not less than 40 $m^2/g$, more preferably not less than 60 $m^2/g$, and still more preferably not less than 100 $m^2/g$. If the $N_2SA$ is less than 40 $m^2/g$, the elongation at break tends to decrease, and thus the durability tends to be lowered. The $N_2SA$ of silica is preferably not more than 220 $m^2/g$, more preferably not more than 200 $m^2/g$, and still more preferably not more than 180 $m^2/g$. If the $N_2SA$ exceeds 220 $m^2/g$, the fuel economy and the processability (sheeting processability) tend to decrease.

The nitrogen adsorption specific surface area of silica herein is a value determined by the BET method in accordance with ASTM D3037-81.

In the rubber composition for a band topping, the silica content is not less than 5 parts by mass, preferably not less than 7 parts by mass, per 100 parts by mass of the rubber component. If the silica content is less than 5 parts by mass, the elongation at break decreases, and therefore the durability is lowered. In addition, the fuel economy is deteriorated as well. The silica content is not more than 17 parts by mass, preferably not more than 15 parts by mass, and more preferably not more than 13 parts by mass. If the silica content exceeds 17 parts by mass, the silica is less dispersed, and therefore the elongation at break and the complex elastic modulus (E*) decrease. In addition, exposure to heat then causes re-agglomeration of the silica, thereby reducing the processability (sheeting processability).

If the silica content is in the above range, the silica is incorporated into a carbon black gel and dispersed together with carbon black, and therefore re-agglomeration of the silica is prevented during mixing or vulcanization. Hence, the rubber composition may contain substantially no silane coupling agent. The silane coupling agent content is preferably not more than 0.05 parts by mass, more preferably not more than 0.01 parts by mass, still more preferably not more than 0.001 parts by mass, and most preferably 0 parts by mass (not contained), per 100 parts by mass of silica. This arrangement contributes to enhancement of the E* and the hardness leading to excellent durability, and also contributes to reduction in the cost.

The above effect is prominent when the carbon black content is not less than 20 parts by mass per 100 parts by mass of the rubber component. Moreover, the effect is prominent when the rubber component contains an isoprene-based rubber (preferably when an isoprene-based rubber and SBR are concomitantly used).

In the rubber composition for a breaker edge strip, the silica content is preferably not less than 5 parts by mass, and more preferably not less than 7 parts by mass, per 100 parts by mass of the rubber component. If the silica content is less than 5 parts by mass, the elongation at break (in the fresh state and after thermal oxidative degradation) and the adhesion may decrease, and therefore the durability may be lowered. The silica content is preferably not more than 17 parts by mass, more preferably not more than 15 parts by mass, and still more preferably not more than 13 parts by mass. If the silica content exceeds 17 parts by mass, the silica is less dispersed, and therefore the elongation at break and the complex elastic modulus (E*) decrease. In addition, exposure to heat may then cause re-agglomeration of the silica, thereby reducing the processability (sheeting processability).

If the silica content is in the above range, the silica is incorporated into a carbon black gel and dispersed together with carbon black, and therefore re-agglomeration of the silica is prevented during mixing or vulcanization. Hence, the rubber composition may contain substantially no silane coupling agent. The silane coupling agent content is preferably not more than 0.05 parts by mass, more preferably not more than 0.01 parts by mass, still more preferably not more than 0.001 parts by mass, and most preferably 0 parts by mass (not contained), per 100 parts by mass of silica. This arrangement contributes to enhancement of the E* and the hardness leading to excellent durability, and also contributes to reduction in the cost.

The above effect is prominent when the carbon black content is not less than 20 parts by mass per 100 parts by mass of the rubber component. Moreover, the effect is prominent when the rubber component contains an isoprene-based rubber (preferably when IR and SBR are concomitantly used).

(Carbon black)

The rubber composition for a band topping includes a carbon black having a certain nitrogen adsorption specific surface area. This provides greater reinforcement, and therefore well-balanced improvement in the complex elastic modulus, the low heat build-up, the elongation at break, and the durability can be achieved. Also, the rubber composition for a breaker edge strip preferably includes a carbon black having a certain nitrogen adsorption specific surface area to achieve the same effect as above.

In the rubber composition for a band topping, the carbon black has a nitrogen adsorption specific surface area ($N_2SA$) of not less than 38 $m^2/g$, preferably not less than 60 $m^2/g$. If the $N_2SA$ is less than 38 $m^2/g$, the reinforcement is not sufficient, and therefore the complex elastic modulus and the elongation at break are not sufficient, and in turn, the durability is lowered. Also, the carbon black has a $N_2SA$ of not more than 125 $m^2/g$, preferably not more than 110 $m^2/g$, and more preferably not more than 90 $m^2/g$. If the $N_2SA$ is more than 125 $m^2/g$, the fuel economy and the processability (sheeting processability) deteriorate.

The $N_2SA$ of carbon black can be determined according to the method A on page 7 of JIS K 6217.

In the rubber composition for a breaker edge strip, the carbon black preferably has a nitrogen adsorption specific surface area ($N_2SA$) of not less than 38 $m^2/g$, more preferably not less than 60 $m^2/g$, and still more preferably not less than 90 $m^2/g$. If the $N_2SA$ is less than 38 $m^2/g$, the reinforcement may not be sufficient, and therefore the hardness and the elongation at break (in the fresh state and after thermal oxidative degradation) may not be sufficient, and in turn, the durability may be lowered. Also, the carbon black preferably has a $N_2SA$ of not more than 125 $m^2/g$, more preferably not more than 115 $m^2/g$. If the $N_2SA$ is more than 125 $m^2/g$, the fuel economy and the processability (sheeting processability) may deteriorate. When the $N_2SA$ of carbon black is in the above range, well-balanced improvement in the hardness, the low heat build-up, the elongation at break (in the fresh state and after thermal oxidative degradation), and the durability can be achieved. Especially in the case where the $N_2SA$ is not less than 90 $m^2/g$, the elongation at break (in the fresh state and after thermal oxidative degradation) is more greatly enhanced.

In the rubber composition for a band topping, the carbon black content is not less than 10 parts by mass, preferably not less than 20 parts by mass, per 100 parts by mass of the rubber component. If the carbon black content is less than 10 parts by mass, the reinforcement is not sufficient, and therefore the complex elastic modulus and the elongation at break are not sufficient, and in turn, the durability is lowered. Also, the carbon black content is not more than 55 parts by mass, preferably not more than 50 parts by mass, per 100 parts by mass of the rubber component. The carbon black content exceeding 55 parts by mass leads to a deterioration in terms of the low heat build-up, the elongation at break, the processability (sheeting processability), and the durability.

In the rubber composition for a breaker edge strip, the carbon black content is preferably not less than 20 parts by mass, more preferably not less than 30 parts by mass, and still more preferably not less than 35 parts by mass, per 100 parts by mass of the rubber component. If the carbon black content is less than 20 parts by mass, the reinforcement may not be sufficient, and therefore the hardness and the elongation at break (in the fresh state and after thermal oxidative degradation) may not be sufficient, and in turn, the durability may be lowered. Also, the carbon black content is preferably not more than 65 parts by mass, and more preferably not more than 58 parts by mass, per 100 parts by mass of the rubber component. The carbon black content exceeding 65 parts by mass may lead to a deterioration in terms of the low heat build-up, the elongation at break (in the fresh state and after thermal oxidative degradation), the processability (sheeting processability), and the durability.

In the rubber composition for a band topping, the total content of silica and carbon black is preferably not less than 30 parts by mass, and more preferably not less than 35 parts by mass, per 100 parts by mass of the rubber component. If the total content is less than 30 parts by mass, the elongation at break, the complex elastic modulus ($E^*$), and the filler dispersion may not be sufficient. Also, the total content is preferably not more than 60 parts by mass, and more preferably not more than 55 parts by mass, per 100 parts by mass of the rubber component. If the total content exceeds 60 parts by mass, the fuel economy and the elongation at break may decrease.

In the rubber composition for a band topping, the silica content based on 100% by mass in total of silica and carbon black is preferably not less than 5% by mass, and more preferably not less than 10% by mass, and is preferably not more than 40% by mass, and more preferably not more than 35% by mass. The content in such a range allows the effects of the present invention to be favorably obtained.

In the rubber composition for a breaker edge strip, the total content of silica and carbon black is preferably not less than 35 parts by mass, more preferably not less than 37 parts by mass, and still more preferably not less than 50 parts by mass, per 100 parts by mass of the rubber component. Also, the total content is preferably not more than 70 parts by mass, and more preferably not more than 65 parts by mass, per 100 parts by mass of the rubber component. When the total content of silica and carbon black is in such a range, both the hardness and the elongation at break (in the fresh state and after thermal oxidative degradation) can be achieved at high levels.

In the rubber composition for a breaker edge strip, the silica content based on 100% by mass in total of silica and carbon black is preferably not less than 3% by mass, and more preferably not less than 5% by mass, and is preferably not more than 40% by mass, and more preferably not more than 35% by mass. The content in such a range allows the effects of the present invention to be favorably obtained.

The rubber composition for a breaker edge strip includes a cobalt salt of an organic acid.

Since the cobalt salt of an organic acid functions to provide a bridge between steel cord and rubber, the inclusion of the cobalt salt of an organic acid can enhance the adhesion between steel cord and rubber. Examples of the cobalt salt of an organic acid include cobalt stearate, cobalt naphthenate, cobalt neodecanoate, cobalt boron 3 neodecanoate, and cobalt abietate. Cobalt stearate is preferred among the examples because it is excellent in processability.

In the rubber composition for a breaker edge strip, the content of the cobalt salt of an organic acid, calculated as cobalt, is not less than 0. 05 parts by mass, preferably not less than 0.08 parts by mass, per 100 parts by mass of the rubber component. If the content is less than 0.05 parts by mass, the adhesion and the processability (sheeting processability) deteriorate.

The content of the cobalt salt of an organic acid, calculated as cobalt, is not more than 0.30 parts by mass, preferably not more than 0.20 parts by mass, more preferably not more than 0.15 parts by mass, and still more preferably not more than 0.12 parts by mass. If the content exceeds 0.30 parts by mass, the elongation at break (in the fresh state and after thermal oxidative degradation) and the adhesion decrease, and therefore the durability is lowered.

The rubber composition of the pneumatic tire of the present invention may optionally include, in addition to the above ingredients, compounding agents generally used in the preparation of rubber compositions, such as reinforcing fillers (e.g. clay), silane coupling agents, stearic acid, zinc oxide, various antioxidants, oils (e.g. aromatic oils), waxes, vulcanization accelerators, and vulcanization accelerator aids.

(Zinc oxide)

In the rubber composition for a band topping, the zinc oxide content is preferably not less than 5.5 parts by mass, and more preferably not less than 6 parts by mass, per 100 parts by mass of the rubber component. Also, the zinc oxide content is preferably not more than 15 parts by mass, more preferably not more than 12 parts by mass, still more preferably not more than 9 parts by mass, and particularly preferably not more than 8 parts by mass, per 100 parts by mass of the rubber component. When the zinc oxide content is in such a range, the effects of the present invention are more favorably obtained.

In the rubber composition for a breaker edge strip, the zinc oxide content is preferably not less than 5.5 parts by mass, and more preferably not less than 6 parts by mass, per 100 parts by mass of the rubber component. Also, the zinc oxide content is preferably not more than 15 parts by mass, and more preferably not more than 12 parts by mass, per 100 parts by mass of the rubber component. When the zinc oxide content is in such a range, the effects of the present invention are more favorably obtained.

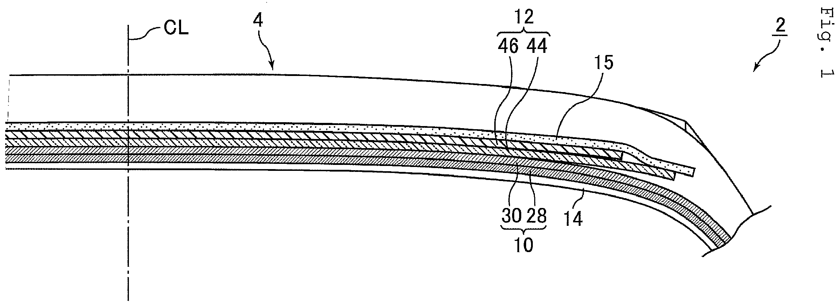

The rubber composition for a band topping according to the present invention can be used for bands. The bands are described below with reference to Fig. 1.

Fig. 1 shows a cross-sectional view illustrating a part of a pneumatic tire according to one embodiment of the present invention.

In Fig. 1, the vertical direction corresponds to a tire radial direction, the horizontal direction corresponds to a tire axis direction, and the direction perpendicular to the plane of paper corresponds to a tire circumferential direction. The dash-dot line "CL" indicates an equatorial plane of a pneumatic tire 2. A tread portion 4 of the pneumatic tire 2 is provided with, sequentially from the inner side in the tire radial direction, an inner liner 14, a carcass 10 (first ply 28, second ply 30), a breaker 12 (inner layer 44, outer layer 46), and a band 15. In one embodiment of the present invention, the rubber composition for a band topping of the present invention is used for the band 15 that is located on the outside of the breaker 12, when viewed in the tire radial direction, and in contact with the breaker 12. Here, the absolute value of an angle formed by the band and the circumferential direction (equatorial plane) is preferably 0 to 40°.

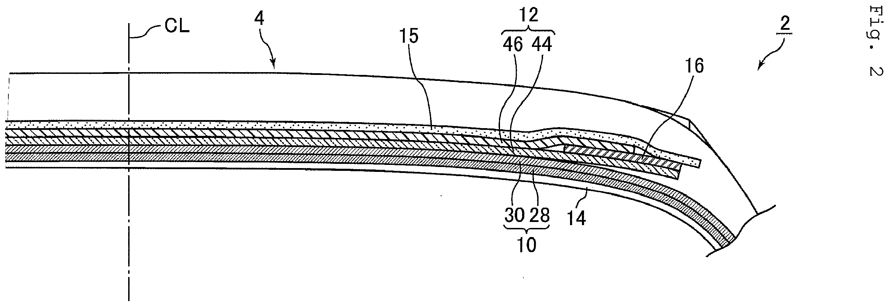

The rubber composition for a breaker edge strip of the pneumatic tire of the present invention can be used for breaker edge strips. The breaker edge strips are described below with reference to Figs. 2 to 4.

Figs. 2 to 4 show cross-sectional views each illustrating a part of a pneumatic tire according to one embodiment of the present invention.

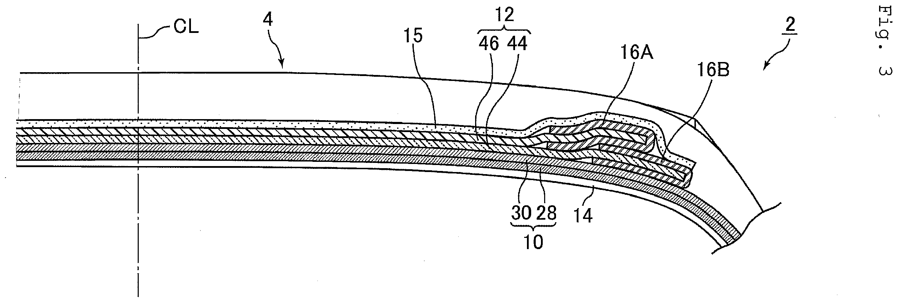

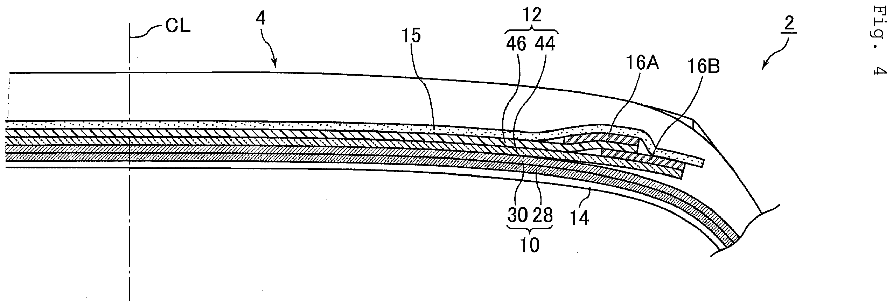

Figs. 2 to 4 are the same as Fig. 1, except that breaker edge strip(s) are provided. In Fig. 2, near an end of the breaker 12, a breaker edge strip 16 is provided on the outside of the inner layer 44 of the breaker 12 when viewed in the tire radial direction, and on the inside of the outer layer 46 of the breaker 12 when viewed in the tire radial direction, namely, between the inner layer 44 and the outer layer 46. In Fig. 3, near an end of the breaker 12, a breaker edge strip 16A is provided so as to cover an end of the outer layer 46 of the breaker 12, and a breaker edge strip 16B is provided so as to cover an end of the inner layer 44 of the breaker 12. In Fig. 4, near an end of the breaker 12, a breaker edge strip 16A is provided on the outside of the outer layer 46 of the breaker 12 when viewed in the tire radial direction, and on the inside of the band 15 when viewed in the tire radial direction, namely, between the outer layer 46 and the band 15. Moreover, a breaker edge strip 16B is provided on the outside of the inner layer 44 of the breaker 12 when viewed in the tire radial direction, and on the inside of the outer layer 46 of the breaker 12 when viewed in the tire radial direction, namely, between the inner layer 44 and the outer layer 46. In one embodiment of the present invention, the rubber composition for a breaker edge strip of the pneumatic tire of the present invention is used for the breaker edge strip 16, the breaker edge strip 16A, and the breaker edge strip 16B shown in Figs. 2 to 4.

The method for preparing the rubber composition of the pneumatic tire of the present invention may be a known method such as a method including mixing the ingredients mentioned above with a rubber mixing device such as a Banbury mixer or an open roll mill.

The pneumatic tire of the present invention can be obtained as follows: a cord is covered with the rubber composition for a band topping and formed into a band, and/or the rubber composition for a breaker edge strip is formed into a breaker edge strip; and then the band and/or the breaker edge strip are/is assembled with other tire components to form an unvulcanized tire, followed by vulcanization, whereby the pneumatic tire (e.g. radial tires) can be prepared.

Examples of the cord usable in the present invention include organic fiber cords, steel cords, and hybrid cords containing organic fiber and steel. Organic fiber cords are preferred among the examples. Examples of the organic fiber cords include Nylon 66 cord, polyester (PE) cord, polyethylenenaphthalate (PEN) cord, rayon cord, and Nylon 11 cord.

The pneumatic tire of the present invention can be used for passenger vehicles, trucks/buses, light trucks, and the like. The pneumatic tire of the present invention is excellent in fuel economy and durability, especially in durability (heavy load durability). Therefore, the pneumatic tire can be suitably used as a long life tire, or a tire for electric vehicles/fuel cell vehicles which have a large total weight.

EXAMPLES

The present invention will be more specifically described based on examples, but the present invention is not limited to these examples.

The individual chemical agents used in examples and comparative examples are listed below.

NR: TSR20

SBR (1): Nipol 1502 (E-SBR, styrene content: 23.5% by mass) produced by ZEON Corporation

SBR (2) : HPR340 (modified S-SBR, bound styrene content: 10% by mass) produced by JSR Corporation

BR (1): BR150B (high-cis BR, cis content: 97% by mass) produced by Ube Industries, Ltd.

BR (2): BR1250H (tin-modified BR) produced by ZEON Corporation

Silica (1): Z115Gr ($N_2SA$: 112 $m^2/g$) produced by Rhodia Japan

Carbon black (1): N326 ($N_2SA$: 78 $m^2/g$) produced by Mitsubishi Chemical Corporation

Carbon black (2): N219 ($N_2SA$: 107 $m^2/g$) produced by Mitsubishi Chemical Corporation

Carbon black (3): N660 ($N_2SA$: 35 $m^2/g$) produced by Mitsubishi Chemical Corporation

Carbon black (4): N110 ($N_2SA$: 127 $m^2/g$) produced by Mitsubishi Chemical Corporation

Oil: Vivatec 500 (TDAE oil) produced by H&R

Silane coupling agent: Si69 produced by Evonik Degussa

Antioxidant: Nocrac 224 produced by Ouchi Shinko Chemical Industrial Co., Ltd.

Stearic acid: Stearic acid produced by NOF Corporation

Zinc oxide: Zinc oxide produced by Mitsui Mining & Smelting Co., Ltd.

Sulfur: Insoluble sulfur (oil content: 20%) produced by Flexsys

Vulcanization accelerator (1): Nocceler NS (N-tert-butyl-2-benzothiazolylsulphenamide) produced by Ouchi Shinko Chemical Industrial Co., Ltd.

Sumikanol 620: Sumikanol 620, modified resorcinol resin (modified resorcinol-formaldehyde condensate) produced by Taoka Chemical Co., Ltd.

Sumikanol 610: Sumikanol 610, modified cresol resin (meta-cresol resin) produced by Taoka Chemical Co., Ltd.

Resorcinol: Resorcinol (resorcinol resin) produced by Sumitomo Chemical Co., Ltd.

HMMM: Sumikanol 508 (partial condensate of hexamethoxymethylol melamine (HMMM), component content: 100% by mass) produced by Taoka Chemical Co., Ltd.

Sumikanol 507A: Sumikanol 507A (modified etherified methylol melamine resin (partial condensate of hexamethylol melamine pentamethyl ether (HMMPME)), containing 35% by mass of silica and oil) produced by Sumitomo Chemical Co., Ltd.

HMT: Nocceler H (hexamethylenetetramine) produced by Ouchi Shinko Chemical Industrial Co., Ltd.

CZ: Nocceler CZ produced by Ouchi Shinko Chemical Industrial Co., Ltd.
DM: Nocceler D produced by Ouchi Shinko Chemical Industrial Co., Ltd.
Cobalt stearate: Cost-F (cobalt content: 9.5% by mass) produced by DIC Corporation
Vulcanization accelerator (2): Nocceler DZ (N,N'-dicyclohexyl-2-benzothiazolylsulphenamide) produced by Ouchi Shinko Chemical Industrial Co., Ltd.
PR12686: Sumilite Resin PR12686 (cashew oil-modified phenolic resin) produced by Sumitomo Bakelite Co., Ltd.

(Rubber composition for band topping)

Examples 1 to 18 and Comparative Examples 1 to 16

According to each formulation shown in Tables 1 to 3 (the sulfur content in Tables refers to the amount of sulfur element), the compounding materials other than the sulfur, vulcanization accelerator, and methylene donors (HMMM, Sumikanol 507A, HMT) were mixed with a 1.7-L Banbury mixer until the temperature reached 180°C to prepare a kneaded mixture. Next, the sulfur, vulcanization accelerator, and methylene donor (HMMM, Sumikanol 507A, HMT) were added to the kneaded mixture, and the resulting mixture was kneaded with an open two-roll mill until the temperature reached 105°C, whereby an unvulcanized rubber composition was obtained.

The unvulcanized rubber composition was press-vulcanized at 170°C for 12 minutes to prepare a vulcanized rubber composition.

Separately, Nylon 66 cord was covered with the unvulcanized rubber composition and shaped into a band. The band is assembled with other tire components, followed by vulcanization at 170°C for 12 minutes to prepare a test tire (tire size: 225/40R18 92Y XL). The band and breaker used are described in detail below.

Breaker: Steel cord, 2+2 1.23, 38 ends/5 cm; topping thickness (rubber thickness of calendered fabric): 1.25 mm

Band: jointless, Nylon 66, 120 dtex/twisted single yarn; topping thickness (rubber thickness of calendered fabric) : 0.85 mm; method: winding a set of five strings in the circumferential direction; angle between the band and the circumferential direction (equatorial plane): 0°.

The obtained unvulcanized rubber compositions, vulcanized rubber compositions, and test tires were evaluated for the following items. Tables 1 to 3 show the results.

(Complex elastic modulus (E*), Fuel economy (tan $\delta$))

The loss tangent (tan $\delta$) and the complex elastic modulus (E*) of each vulcanized rubber composition were determined at a temperature of 70 °C, an initial strain of 10%, a dynamic strain of 2%, and a frequency of 10 Hz with a viscoelastic spectrometer produced by Iwamoto Seisakusho Co., Ltd.

A smaller tan $\delta$ value indicates low rolling resistance, which in turn indicates better fuel economy. A greater E* value indicates greater durability.

(Tensile test)

No. 3 dumbbell specimens formed of the vulcanized rubber compositions were subjected to a tensile test at room temperature according to JIS K 6251 "Rubber, vulcanized or thermoplastic -- Determination of tensile stress-strain properties," and the elongation at break EB (%) was determined. A greater EB indicates greater elongation at break.

(Sheeting (topping) processability)

The unvulcanized rubber compositions were each fed into a cold feed extruder to form a rubber sheet having a thickness of 0.85 mm and a width of about 1.7 m. The prepared rubber sheets were pressure-bonded to both sides of Nylon 66 cord. The flatness and finish of the surface of the resulting sheet were observed and evaluated. The evaluation results are presented as indices relative to that of Comparative Example 1 taken as 100. A greater index value indicates better processability (sheeting processability).

(Fuel economy)

The rolling resistance of each of the test tires was measured with a rolling resistance tester by running it under the conditions: rim 15x6JJ, inner pressure 230 kPa, load 3.43 kN, and speed 80 km/h. The results of rolling resistance are presented as indices by calculating the following formula when the value of rolling resistance of Comparative Example 1 is taken as 100. A greater index value indicates better performance in terms of rolling resistance (lower rolling resistance and better fuel economy).

$$(\text{Rolling resistance index}) = (\text{Rolling resistance of Comparative Example 1})/(\text{Rolling resistance of each formulation}) \times 100$$

(Durability)

The test tires were each run on a drum at a speed of 100 km/h and a test environment temperature of 30°C under 150% of the maximum load (at the maximum inner pressure) according to JIS. The running distance until a separation around the breaker (BEL between the band and the breaker) occurred and thereby caused the tire to have a swollen appearance (until the tire was damaged) was measured. The results of running distance are presented as indices relative to that of Comparative Example 1 taken as 100. A greater index value indicates greater durability.

(Table 1)

| Rubber composition for band topping | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Formulation (part(s) by mass) | NR | 80 | 80 | 80 | 80 | 80 | 80 | 80 | 80 | 100 | 60 | 60 | 60 | 80 |
| | SBR (1) | 20 | 20 | 20 | 20 | 20 | 20 | 20 | 20 | — | 25 | 25 | — | 20 |
| | SBR (2) | — | — | — | — | — | — | — | — | — | — | — | 25 | — |
| | BR (1) | — | — | — | — | — | — | — | — | — | 15 | — | — | — |
| | BR (2) | — | — | — | — | — | — | — | — | — | — | 15 | 15 | — |
| | Silica (1) | 10 | 10 | 10 | 6 | 14 | 10 | 10 | 10 | 10 | 10 | 10 | 10 | 10 |
| | Carbon black (1)(N326) | 40 | 40 | 40 | 42 | 38 | 45 | 35 | — | 40 | 40 | 40 | 40 | 40 |
| | Carbon black (2)(N219) | — | — | — | — | — | — | — | 40 | — | — | — | — | — |
| | Carbon black (3)(N660) | — | — | — | — | — | — | — | — | — | — | — | — | — |
| | Carbon black (4)(N110) | — | — | — | — | — | — | — | — | — | — | — | — | — |
| | Oil | 2 | 2 | 2 | 2 | 2 | 2 | 2 | 2 | 2 | 2 | 2 | 2 | 2 |
| | Silane coupling agent | — | — | — | — | — | — | — | — | — | — | — | — | — |
| | Antioxidant | 1 | 1 | 1 | 1 | 1 | 1 | 1 | 1 | 1 | 1 | 1 | 1 | 1 |
| | Stearic acid | 3 | 3 | 3 | 3 | 3 | 3 | 3 | 3 | 3 | 3 | 3 | 3 | 3 |
| | Zinc oxide | 7 | 7 | 7 | 7 | 7 | 7 | 7 | 7 | 7 | 7 | 7 | 7 | 7 |
| | Sulfur | 2.5 | 1.8 | 2.7 | 2.5 | 2.5 | 2.5 | 2.5 | 2.5 | 2.5 | 2.5 | 2.5 | 2.5 | 2.5 |
| | Vulcanization accelerator (1) | 1.1 | 1.1 | 1.1 | 1.1 | 1.1 | 1.1 | 1.1 | 1.1 | 1.1 | 1.1 | 1.1 | 1.1 | 1.1 |
| | Sumikanol 620 | 1.5 | 2 | 1.2 | 1.5 | 1.5 | 1.5 | 1.5 | 1.5 | 1.5 | 1.5 | 1.5 | 1.5 | — |
| | Sumikanol 610 | — | — | — | — | — | — | — | — | — | — | — | — | — |
| | PR12686 | — | — | — | — | — | — | — | — | — | — | — | — | 1.5 |
| | Resorcinol | — | — | — | — | — | — | — | — | — | — | — | — | — |
| | HMMM | — | — | — | — | — | — | — | — | — | — | — | — | — |
| | Sumikanol 507A | 1.8 | 2.4 | 1.44 | 1.8 | 1.8 | 1.8 | 1.8 | 1.8 | 1.8 | 1.8 | 1.8 | 1.8 | 1.8 |
| | HMT | — | — | — | — | — | — | — | — | — | — | — | — | — |
| Evaluation results | E*(70℃) | 5 | 4.9 | 5.1 | 5.05 | 5.1 | 5.7 | 4.4 | 5.5 | 4.6 | 5.4 | 5.2 | 5.05 | 5.8 |
| | tan δ (70℃) | 0.11 | 0.118 | 0.109 | 0.118 | 0.117 | 0.12 | 0.102 | 0.123 | 0.105 | 0.112 | 0.091 | 0.085 | 0.130 |
| | Elongation at break (%) | 510 | 530 | 490 | 475 | 505 | 480 | 550 | 580 | 560 | 475 | 450 | 435 | 565 |
| | Sheeting processability | 102 | 100 | 102 | 102 | 90 | 105 | 95 | 99 | 98 | 100 | 95 | 85 | 105 |
| | Fuel economy | 100.5 | 100.2 | 100.6 | 100.2 | 100.2 | 100 | 100.8 | 100 | 100.7 | 100.5 | 101.2 | 101.6 | 99.7 |
| | Durability | 140 | 145 | 130 | 120 | 135 | 140 | 130 | 155 | 135 | 120 | 115 | 110 | 140 |

(Table 2)

| Rubber composition for band topping | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Formulation (part(s) by mass) | NR | 80 | 80 | 80 | 80 | 80 | 80 | 80 | 80 | 80 | 80 | 80 | 80 |
| | SBR (1) | 20 | 20 | 20 | 20 | 20 | 20 | 20 | 20 | 20 | 20 | 20 | 20 |
| | SBR (2) | — | — | — | — | — | — | — | — | — | — | — | — |
| | BR (1) | — | — | — | — | — | — | — | — | — | — | — | — |
| | BR (2) | — | — | — | — | — | — | — | — | — | — | — | — |
| | Silica (1) | — | — | — | 10 | 10 | 10 | 2 | 20 | 10 | 10 | 10 | 10 |
| | Carbon black (1)(N326) | 45 | 45 | 45 | 40 | 40 | 40 | 44 | 35 | — | — | 57 | 8 |
| | Carbon black (2)(N219) | — | — | — | — | — | — | — | — | — | — | — | — |
| | Carbon black (3)(N660) | — | — | — | — | — | — | — | — | 40 | — | — | 32 |
| | Carbon black (4)(N110) | — | — | — | — | — | — | — | — | — | 40 | — | — |
| | Oil | 2 | 2 | 2 | 2 | 2 | 2 | 2 | 2 | 2 | 2 | 2 | 2 |
| | Silane coupling agent | — | — | — | — | — | — | — | — | — | — | — | — |
| | Antioxidant | 1 | 1 | 1 | 1 | 1 | 1 | 1 | 1 | 1 | 1 | 1 | 1 |
| | Stearic acid | 3 | 3 | 3 | 3 | 3 | 3 | 3 | 3 | 3 | 3 | 3 | 3 |
| | Zinc oxide | 7 | 7 | 7 | 7 | 7 | 7 | 7 | 7 | 7 | 7 | 7 | 7 |
| | Sulfur | 3 | 1.3 | 4 | 3 | 2.5 | 2.5 | 2.5 | 2.5 | 2.5 | 2.5 | 2.5 | 2.5 |
| | Vulcanization accelerator (1) | 1.1 | 1.1 | 1.1 | 1.1 | 1.1 | 1.1 | 1.1 | 1.1 | 1.1 | 1.1 | 1.1 | 1.1 |
| | Sumikanol 620 | 1.5 | 3 | 1 | 1 | 0.5 | 4 | 1.5 | 1.5 | 1.5 | 1.5 | 1.5 | 1.5 |
| | Sumikanol 610 | — | — | — | — | — | — | — | — | — | — | — | — |
| | Resorcinol | — | — | — | — | — | — | — | — | — | — | — | — |
| | HMMM | — | — | — | — | — | — | — | — | — | — | — | — |
| | Sumikanol 507A | 1.8 | 3.6 | 1.2 | 1.8 | 0.6 | 4 | 1.8 | 1.8 | 1.8 | 1.8 | 1.8 | 1.8 |
| | HMT | — | — | — | — | — | — | — | — | — | — | — | — |
| Evaluation results | E*(70°C) | 4.95 | 4.95 | 5.05 | 5.05 | 4.15 | 5.5 | 5.2 | 5.1 | 4.6 | 5.9 | 6.5 | 4.7 |
| | tan δ (70°C) | 0.121 | 0.126 | 0.116 | 0.114 | 0.107 | 0.128 | 0.124 | 0.128 | 0.097 | 0.14 | 0.142 | 0.092 |
| | Elongation at break (%) | 435 | 445 | 425 | 495 | 540 | 450 | 450 | 490 | 470 | 590 | 470 | 480 |
| | Sheeting processability | 100 | 100 | 98 | 101 | 102 | 70 | 102 | 75 | 110 | 90 | 80 | 110 |
| | Fuel economy | 100 | 99.9 | 100.2 | 100.2 | 100.6 | 100.5 | 99.9 | 99.7 | 101 | 98.5 | 98.3 | 101.2 |
| | Durability | 100 | 95 | 70 | 107 | 95 | 100 | 102 | 115 | 105 | 110 | 85 | 105 |

(Table 3)

| Rubber composition for band topping | | Example | | | | | Comparative Example | | | |
|---|---|---|---|---|---|---|---|---|---|---|
| | | 14 | 15 | 16 | 17 | 18 | 13 | 14 | 15 | 16 |
| Formulation (part(s) by mass) | NR | 80 | 80 | 80 | 80 | 80 | 40 | 20 | 80 | 80 |
| | SBR (1) | – | – | 20 | 20 | 20 | 60 | 80 | 20 | 20 |
| | SBR (2) | – | – | – | – | – | – | – | – | – |
| | BR (1) | – | – | – | – | – | – | – | – | – |
| | BR (2) | 20 | – | – | – | – | – | – | – | – |
| | Silica (1) | 10 | 10 | 10 | 10 | 10 | 10 | 10 | – | 10 |
| | Carbon black (1)(N326) | 40 | 15 | 40 | 40 | 40 | 40 | 40 | 45 | 40 |
| | Carbon black (2)(N219) | – | – | – | – | – | – | – | – | – |
| | Carbon black (3)(N660) | – | 25 | – | – | – | – | 35 | – | – |
| | Carbon black (4)(N110) | – | – | – | – | – | – | – | – | – |
| | Oil | 2 | 2 | 2 | 2 | 2 | 2 | 2 | 2 | 2 |
| | Silane coupling agent | – | – | – | – | – | – | – | – | – |
| | Antioxidant | 1 | 1 | 1 | 1 | 1 | 1 | 1 | 1 | 1 |
| | Stearic acid | 3 | 3 | 3 | 3 | 3 | 3 | 3 | 3 | 3 |
| | Zinc oxide | 7 | 7 | 7 | 7 | 7 | 7 | 7 | 7 | 7 |
| | Sulfur | 2.5 | 2.5 | 2.5 | 2.5 | 2.5 | 2.5 | 2.5 | 2.5 | 1.3 |
| | Vulcanization accelerator (1) | 1.1 | 1.1 | 1.1 | 1.1 | 1.1 | 1.1 | 1.1 | 1.1 | 1.1 |
| | Sumikanol 620 | 1.5 | 1.5 | 1.5 | – | – | 1.5 | 1.5 | 1.5 | 3 |
| | Sumikanol 610 | – | – | – | – | 1.5 | – | – | – | – |
| | Resorcinol | – | – | – | 1.5 | – | – | – | – | – |
| | HMMM | – | – | 1.17 | – | – | – | – | – | – |
| | Sumikanol 507A | 1.8 | 1.8 | – | 1.8 | 1.8 | 1.8 | 1.8 | – | 3.6 |
| | HMT | – | – | – | – | – | – | – | 0.3 | – |
| Evaluation results | E*(70°C) | 4.95 | 4.75 | 5 | 5.4 | 5.4 | 5.5 | 5.7 | 5.1 | 4.9 |
| | tan δ (70°C) | 0.095 | 0.101 | 0.11 | 0.106 | 0.12 | 0.131 | 0.144 | 0.11 | 0.118 |
| | Elongation at break (%) | 505 | 470 | 520 | 490 | 540 | 470 | 450 | 510 | 490 |
| | Sheeting processability | 90 | 112 | 99 | 95 | 105 | 110 | 120 | 109 | 100 |
| | Fuel economy | 100.5 | 100.8 | 100.5 | 100.6 | 100.2 | 99.5 | 98.7 | 100.5 | 100.2 |
| | Durability | 120 | 130 | 140 | 125 | 145 | 110 | 95 | 70 | 80 |

As shown in Tables 1 to 3, in Examples which included, in predetermined amounts relative to a rubber component containing a predetermined amount of an isoprene-based rubber: sulfur; at least one first compound selected from the group consisting of resorcinol resins, modified resorcinol resins, cresol resins, modified cresol resins, phenolic resins, and modified phenolic resins; at least one second compound selected from the group consisting of partial condensates of hexamethoxymethylol melamine and partial condensates of hexamethylol melamine pentamethyl ether; silica; and a carbon black having a certain nitrogen adsorption specific surface area, improvement in the complex elastic modulus (E*), the low heat build-up, and the elongation at break was achieved while the processability (sheeting processability) was maintained; moreover, the occurrence of BEL was suppressed, and the durability and the fuel economy were excellent.

(Rubber composition for breaker edge strip)

Examples 19 to 34 and Comparative Examples 17 to 30

According to each formulation shown in Tables 4 and 5 (the sulfur content in Tables refers to the amount of sulfur element), the compounding materials other than the sulfur, vulcanization accelerator, and methylene donors (HMMM, Sumikanol 507A, HMT) were mixed with a 1.7-L Banbury mixer until the temperature reached 180°C to prepare a kneaded mixture. Next, the sulfur, vulcanization accelerator, and methylene donor (HMMM, Sumikanol 507A, HMT) were added to the kneaded mixture, and the resulting mixture was kneaded with an open two-roll mill until the temperature reached 105°C, whereby an unvulcanized rubber composition was obtained.

The unvulcanized rubber composition was press-vulcanized at 150°C for 30 minutes to prepare a vulcanized rubber composition.

Separately, the unvulcanized rubber composition was shaped into a breaker edge strip and then assembled with other tire components, followed by vulcanization at 170°C for 12 minutes to prepare a test tire (tire size: 225/40R18 92Y XL). The breaker edge strip (sheet having a thickness of 0.5 mm and a total width of 20 mm) was placed as shown in Fig. 3. The breaker used was prepared by covering steel cord (1×3/.30HT) with a breaker topping rubber (having a formulation shown in Table 4 or 5) and then shaping it into a breaker.

The obtained unvulcanized rubber compositions, vulcanized rubber compositions, and test tires were evaluated for the following items. Tables 4 and 5 show the results.

(Hardness (Hs))

The hardness of the vulcanized rubber compositions at 25°C was determined using a JIS-A hardness meter.

(Tensile test)

No. 3 dumbbell specimens formed of the vulcanized rubber compositions were subjected to a tensile test at room temperature according to JIS K 6251 "Rubber, vulcanized or thermoplastic -- Determination of tensile stress-strain properties", and the elongation at break EB (%) (in the fresh state) was determined. Moreover, after thermal oxidative degradation of the vulcanized rubber compositions at 80°C for 96 hours, the elongation at break EB (%) (after thermal oxidative degradation) was determined for the degraded vulcanized rubber compositions in the same manner as above. A greater EB value indicates greater elongation at break.

(Adhesion (rubber coverage on cord))

The steel cord was covered with each unvulcanized rubber composition and shaped, and then vulcanized at 150°C for 30 minutes to form a steel cord-covering rubber composition. The obtained rubber composition was subjected to a test described below to determine the rubber coverage (%) of the rubber composition.

The rubber coverage (%) refers to a ratio of the part of the separation surface which was covered with rubber after the steel cord was separated from the rubber (a rubber coverage of 100% means that whole surface is covered). A higher rubber coverage (%) indicates better adhesion.

(Sheeting (topping) processability)

The unvulcanized rubber compositions were each fed into a cold feed extruder and extruded under conditions to form a rubber sheet having a thickness of 0.5 mm and a width of about 1.7 m. The flatness and finish of the surface of the resulting sheet were observed and evaluated. The evaluation results are presented as indices relative to that of Comparative Example 17 taken as 100. A greater index value indicates better processability (sheeting processability).

(Durability)

The test tires were each run on a drum at a speed of 100 km/h and a test environment temperature of 30°C under 150 % of the maximum load (at the maximum inner pressure) according to JIS. The running distance until a separation around the breaker (BEL between the band and the breaker) occurred and thereby caused the tire to have a swollen appearance (until the tire was damaged) was measured. The results of running distance are presented as indices relative to that of Comparative Example 17 taken as 100. A greater index value indicates greater durability.

(Table 4)

| Rubber composition for breaker edge strips | | Example | | | | | | | | | | | | | | | |
|---|---|---|---|---|---|---|---|---|---|---|---|---|---|---|---|---|---|
| | | 19 | 20 | 21 | 22 | 23 | 24 | 25 | 26 | 27 | 28 | 29 | 30 | 31 | 32 | 33 | 34 |
| Formulation (part(s) by mass) | NR | 100 | 100 | 100 | 100 | 100 | 100 | 100 | 100 | 100 | 100 | 100 | 100 | 100 | 100 | 100 | 100 |
| | Silica (1) | 10 | 10 | 15 | 5 | — | 10 | 10 | 10 | 10 | 10 | 10 | 10 | 10 | 10 | 10 | 10 |
| | Carbon black (1)(N326) | — | 57 | — | — | — | — | — | — | — | — | — | — | — | — | — | — |
| | Carbon black (2)(N219) | 57 | — | 52 | 60 | 65 | 57 | 57 | 57 | 57 | 57 | 57 | 57 | 57 | 57 | 57 | 57 |
| | Oil | 2 | 2 | 2 | 2 | 2 | 2 | 2 | 2 | 2 | 2 | 2 | 2 | 2 | 2 | 2 | 2 |
| | Silane coupling agent | — | — | 1.2 | — | — | — | — | — | — | — | — | — | — | — | — | — |
| | Antioxidant | 1 | 1 | 1 | 1 | 1 | 1 | 1 | 1 | 1 | 1 | 1 | 1 | 1 | 1 | 1 | 1 |
| | Cobalt stearate | 1.2 | 1.2 | 1.2 | 1.2 | 2.5 | 0.6 | 2 | 2 | 2.5 | 1.2 | 1.2 | 1.2 | 1.2 | 1.2 | 1.2 | 2 |
| | Stearic acid | — | — | — | — | — | 0.6 | — | — | — | — | — | — | — | — | — | — |
| | Zinc oxide | 10 | 10 | 10 | 10 | 10 | 10 | 10 | 10 | 10 | 10 | 10 | 10 | 10 | 10 | 10 | 10 |
| | Sulfur | 3 | 3 | 3 | 3 | 3 | 3 | 3 | 2.5 | 2.2 | 3.9 | 3 | 3 | 3 | 3 | 3 | 2.5 |
| | Vulcanization accelerator (2) | 1 | 1 | 1 | 1 | 0.9 | 1 | 1 | 1.1 | 1.2 | 0.9 | 1 | 1 | 1 | 1 | 1 | 1.1 |
| | Sumikanol 620 | 1.5 | 1.5 | 1.5 | 1.5 | 1.5 | 2 | 1.5 | 1.7 | 2 | 1.5 | — | — | — | 1.5 | 1.5 | 1.7 |
| | Sumikanol 610 | — | — | — | — | — | — | — | — | — | — | — | — | 1.5 | — | — | — |
| | PR12686 | — | — | — | — | — | — | — | — | — | — | 1.5 | 3 | — | — | — | — |
| | HMMM | — | — | — | — | — | — | — | — | — | — | — | — | — | 1.3 | — | — |
| | Sumikanol 507A | 2 | 2 | 2 | 2 | 2 | 2.67 | 2 | 2.27 | 3 | 2 | 2 | 2 | 2 | — | 2 | 2.27 |
| | HMT | — | — | — | — | — | — | — | — | — | — | — | — | — | — | — | — |
| | Formulation of breaker topping | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Example 21 | Example 21 |
| Performance evaluation | Hardness (Hs) | 74 | 72 | 73 | 74 | 75 | 74 | 76 | 75 | 73 | 75 | 76 | 77 | 75 | 74 | 74 | 75 |
| | Elongation at break (in fresh state) (%) | 480 | 460 | 495 | 455 | 445 | 500 | 470 | 495 | 505 | 435 | 495 | 485 | 500 | 485 | 480 | 495 |
| | Elongation at break (after thermal oxidative degradation) (%) | 370 | 355 | 385 | 340 | 330 | 385 | 330 | 400 | 405 | 300 | 395 | 390 | 380 | 365 | 370 | 400 |
| | Adhesion (Rubber coverage (%)) | 80 | 80 | 85 | 75 | 70 | 75 | 85 | 75 | 70 | 75 | 70 | 70 | 80 | 80 | 80 | 75 |
| | Sheeting processability | 100 | 110 | 90 | 105 | 105 | 85 | 105 | 80 | 80 | 95 | 115 | 110 | 110 | 100 | 100 | 80 |
| | Durability | 140 | 125 | 150 | 135 | 130 | 150 | 130 | 150 | 150 | 125 | 140 | 150 | 155 | 140 | 145 | 145 |

(Table 5)

| Rubber composition for breaker edge strips | | Comparative Example | | | | | | | | | | | | | |
|---|---|---|---|---|---|---|---|---|---|---|---|---|---|---|---|
| | | 17 | 18 | 19 | 20 | 21 | 22 | 23 | 24 | 25 | 26 | 27 | 28 | 29 | 30 |
| Formulation (part(s) by mass) | NR | 100 | 100 | 100 | 100 | 100 | 100 | 100 | 100 | 100 | 100 | 100 | 100 | 100 | 100 |
| | Silica (1) | — | 10 | — | — | 10 | 10 | 10 | 10 | 10 | 10 | 10 | 10 | — | — |
| | Carbon black (1)(N326) | — | — | — | — | — | — | — | — | — | — | — | — | — | — |
| | Carbon black (2)(N219) | 65 | 57 | 65 | 65 | 57 | 57 | 57 | 57 | 57 | 57 | 57 | 57 | 65 | 65 |
| | Oil | 2 | 2 | 2 | 2 | 2 | 2 | 2 | 2 | 2 | 2 | 2 | 2 | 2 | 2 |
| | Silane coupling agent | — | — | — | — | — | — | — | — | — | — | — | — | — | — |
| | Antioxidant | 1 | 1 | 1 | 1 | 1 | 1 | 1 | 1 | 1 | 1 | 1 | 1 | 1 | 1 |
| | Cobalt stearate | 1.2 | 1.2 | 1.2 | 1.2 | 3 | 1.2 | 3 | 0.6 | 1.2 | 1.2 | 1.2 | 1.2 | 1.2 | 1.2 |
| | Stearic acid | — | — | — | — | — | — | — | 0.6 | — | — | — | — | — | — |
| | Zinc oxide | 10 | 10 | 10 | 10 | 10 | 10 | 10 | 10 | 10 | 10 | 10 | 10 | 10 | 10 |
| | Sulfur | 4.5 | 4.5 | 5 | 5.5 | 1.9 | 4.2 | 3 | 3 | 3 | 3 | 3 | 3 | 4.5 | 5.5 |
| | Vulcanization accelerator (2) | 1 | 1 | 0.9 | 0.8 | 1.3 | 0.8 | 1 | 0.8 | 1 | 1 | 1 | 1 | 1 | 0.8 |
| | Sumikanol 620 | — | — | — | — | 2 | 0.5 | 0.4 | 5 | — | 1.5 | 1.5 | 1.5 | — | — |
| | Sumikanol 610 | — | — | — | — | — | — | — | — | — | — | — | — | — | — |
| | PR12686 | — | — | — | — | — | — | — | — | 5 | — | — | — | — | — |
| | HMMM | — | — | — | — | — | — | — | — | — | — | — | — | — | — |
| | Sumikanol 507A | — | — | — | — | 2.67 | 1.5 | 2 | 2 | 2 | 0.5 | 5 | — | — | — |
| | HMT | — | — | — | — | — | — | — | — | — | — | — | 1.5 | — | — |
| | Formulation of breaker topping | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Comparative Example18 | Example 21 | Example 21 |
| Performance evaluation | Hardness (Hs) | 74 | 74 | 75 | 76 | 73 | 74 | 72 | 75 | 79 | 70 | 76 | 75 | 74 | 75 |
| | Elongation at break (in fresh state) (%) | 420 | 440 | 415 | 395 | 495 | 435 | 480 | 460 | 455 | 495 | 415 | 440 | 420 | 415 |
| | Elongation at break (after thermal oxidative degradation) (%) | 265 | 285 | 250 | 230 | 380 | 285 | 275 | 270 | 255 | 370 | 245 | 340 | 265 | 250 |
| | Adhesion (Rubber coverage (%)) | 80 | 85 | 85 | 80 | 50 | 65 | 75 | 80 | 50 | 65 | 80 | 50 | 80 | 85 |
| | Sheeting processability | 100 | 95 | 100 | 100 | 70 | 95 | 100 | 60 | 110 | 110 | 50 | 120 | 100 | 100 |
| | Durability | 100 | 105 | 85 | 70 | 60 | 108 | 105 | 105 | 50 | 110 | 90 | 110 | 108 | 90 |

As shown in Tables 4 and 5, in Examples which included, in predetermined amounts relative to a rubber component containing a predetermined amount of an isoprene-based rubber: sulfur; at least one first compound selected from the group consisting of resorcinol resins, modified resorcinol resins, cresol resins, modified cresol resins, phenolic resins, and modified phenolic resins; at least one second compound selected from the group consisting of partial condensates of hexamethoxymethylol melamine and partial condensates of hexamethylol melamine pentamethyl ether; and a cobalt salt of an organic acid, the elongation at break (in the fresh state) and the elongation at break (after thermal oxidative degradation) were enhanced while the hardness, the adhesion and the processability (sheeting processability) were maintained; and the occurrence of BEL was suppressed and thus the durability was excellent.

REFERENCE SIGNS LIST

2: Pneumatic tire
4: Tread portion
10: Carcass
12: Breaker
14: Inner liner
15: Band
16: Breaker edge strip
16A: Breaker edge strip
16B: Breaker edge strip
28: First ply
30: Second ply
44: Inner layer
46: Outer layer

**Claims**

1. A pneumatic tire comprising at least one of:

   i) a band formed from a rubber composition for a band topping, comprising, per 100 parts by mass of a rubber component containing not less than 50% by mass of an isoprene-based rubber,
   1.5 to 2.9 parts by mass of sulfur,
   1 to 3 parts by mass of at least one first compound selected from the group consisting of resorcinol resins, modified resorcinol resins, cresol resins, modified cresol resins, phenolic resins, and modified phenolic resins,
   0.7 to 3 parts by mass of at least one second compound selected from the group consisting of partial condensates of hexamethoxymethylol melamine and partial condensates of hexamethylol melamine pentamethyl ether,
   5 to 17 parts by mass of silica, and
   10 to 55 parts by mass of a carbon black having a nitrogen adsorption specific surface area of 38 to 125 $m^2$/g, and
   ii) a breaker edge strip formed from a rubber composition for a breaker edge strip, comprising, per 100 parts by mass of a rubber component containing not less than 50% by mass of an isoprene-based rubber,
   2.0 to 3.99 parts by mass of sulfur,
   0.6 to 4 parts by mass of at least one first compound selected from the group consisting of resorcinol resins, modified resorcinol resins, cresol resins, modified cresol resins, phenolic resins, and modified phenolic resins,
   0.6 to 4 parts by mass of at least one second compound selected from the group consisting of partial condensates of hexamethoxymethylol melamine and partial condensates of hexamethylol melamine pentamethyl ether, and
   0.05 to 0.30 parts by mass of a cobalt salt of an organic acid calculated as cobalt.

2. The pneumatic tire according to claim 1 comprising a band formed from a rubber composition for a band topping, wherein the rubber component of the rubber composition contains styrene-butadiene rubber.

3. The pneumatic tire according to claim 1 comprising a breaker edge strip formed from a rubber composition for a breaker edge strip, wherein the rubber composition comprises silica.

4. The pneumatic tire according to claim 3,

wherein the rubber composition has a total content of silica and carbon black of 50 to 70 parts by mass per 100 parts by mass of the rubber component.

**Patentansprüche**

1. Luftreifen, umfassend zumindest eines von:

i) einem Band, das aus einer Kautschukzusammensetzung für eine Bandgummierung gebildet ist, umfassend, je 100 Masseteile einer Kautschukkomponente, die nicht weniger als 50 Masse-% eines isoprenbasierten Kautschukes enthält,
1,5 bis 2,9 Masseteile Schwefel,
1 bis 3 Masseteile zumindest einer ersten Verbindung, ausgewählt aus der Gruppe, bestehend aus Resorcinharzen, modifizierten Resorcinharzen, Kresolharzen, modifizierten Kresolharzen, Phenolharzen und modifizierten Phenolharzen,
0,7 bis 3 Masseteile zumindest einer zweiten Verbindung, ausgewählt aus der Gruppe, bestehend aus Teilkondensaten von Hexamethoxymethylolmelamin und Teilkondensaten von Hexamethylolmelaminpentamethylether,
5 bis 17 Masseteile Silica, und
10 bis 55 Masseteile eines Rußes mit einer spezifischen Stickstoffadorptionsoberfläche von 38 bis 125 m$^2$/g, und
ii) einem Breakerkantenstreifen, der aus einer Kautschukzusammensetzung für einen Breakerkantenstreifen gebildet ist, umfassend, je 100 Masseteile einer Kautschukkomponente, die nicht weniger als 50 Masse-% eines isoprenbasierten Kautschuks enthält,
2,0 bis 3,99 Masseteile Schwefel,
0,6 bis 4 Masseteile zumindest einer ersten Verbindung, ausgewählt aus der Gruppe, bestehend aus Resorcinharzen, modifizierten Resorcinharzen, Kresolharzen, modifizierten Kresolharzen, Phenolharzen und modifizierten Phenolharzen,
0,6 bis 4 Masseteile zumindest einer zweiten Verbindung, ausgewählt aus der Gruppe, bestehend aus Teilkondensaten von Hexamethoxymethylolmelamin und Teilkondensaten von Hexamethylolmelaminpentamethylether, und
0,05 bis 0,30 Masseteile eines Kobaltsalzes einer organischen Säure, als Kobalt gerechnet.

2. Luftreifen nach Anspruch 1, der ein Band umfasst, das aus einer Kautschukzusammensetzung für eine Bandgummierung gebildet ist, wobei die Kautschukkomponente der Kautschukzusammensetzung Styrol-Butadien-Kautschuk enthält.

3. Luftreifen nach Anspruch 1, der einen Breakerkantenstreifen umfasst, der aus einer Kautschukzusammensetzung für einen Breakerkantenstreifen gebildet ist, wobei die Kautschukzusammensetzung Silica umfasst.

4. Luftreifen nach Anspruch 3, wobei die Kautschukzusammensetzung einen Gesamtgehalt von Silica und Ruß von 50 bis 70 Masseteilen je 100 Masseteile der Kautschukkomponente aufweist.

**Revendications**

1. Bandage pneumatique comprenant l'un au moins des éléments suivants:

i) une bande formée d'une composition au caoutchouc pour un revêtement de bandage, comprenant, pour 100 parties en masse d'un composant au caoutchouc qui ne contient pas moins de 50 % en masse d'un caoutchouc à base d'isoprène :

1,5 à 2,9 parties en masse de soufre,
1 à 3 parties en masse d'au moins un premier composé sélectionné parmi le groupe comprenant des résines au résorcinol, des résines au résorcinol modifié, des résines au crésol, des résines au crésol modifié, des résines phénoliques, et des résines phénoliques modifiées,
0,7 à 3 parties en masse d'au moins un second composé sélectionné parmi le groupe comprenant des condensats partiels de hexaméthoxyméthylol mélamine et des condensats partiels de hexaméthylol mélamine pentaméthyle éther,

5 à 17 parties en masse de silice, et
10 à 55 parties en masse d'un noir de carbone ayant une aire de surface spécifique d'adsorption pour l'azote de 38 à 125 m$^2$/g, et

ii) un ruban de bordure pour armature de sommet formé d'une composition au caoutchouc pour un ruban de bordure d'armature de sommet, comprenant, pour 100 parties en masse d'un composant au caoutchouc qui ne contient pas moins de 50 % en masse d'un caoutchouc à base d'isoprène :

2,0 à 3,99 parties en masse de soufre,
0,6 à 4 parties en masse d'au moins un premier composé sélectionné parmi le groupe comprenant résines au résorcinol, résines au résorcinol modifié, résines au crésol, résines au crésol modifié, résines phénoliques, et résines phénoliques modifiées,
0,6 à 4 parties en masse d'au moins un second composé sélectionné parmi le groupe comprenant des condensats partiels de hexaméthoxyméthylol mélamine et des condensats partiels de hexaméthylol mélamine pentaméthyle éther, et
0,05 à 0,30 parties en masse d'un sel de cobalt d'un acide organique calculé à titre de cobalt.

2. Bandage pneumatique selon la revendication 1, comprenant une bande formée à partir d'une composition au caoutchouc pour un revêtement de bandage,
dans lequel le composant au caoutchouc de la composition au caoutchouc contient un caoutchouc styrène-butadiène.

3. Bandage pneumatique selon la revendication 1, comprenant un ruban de bordure pour armature de sommet formé d'une composition au caoutchouc pour un ruban de bordure d'armature de sommet,
dans lequel la composition au caoutchouc comprend de la silice.

4. Bandage pneumatique selon la revendication 3,
dans lequel la composition au caoutchouc présente une teneur totale en silice et en noir de carbone de 50 à 70 parties en masse pour 100 parties en masse du composant au caoutchouc.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100024947 A1
- EP 2141109 A2
- EP 1439204 A2
- US 20080300368 A1
- US 20050192386 A1
- JP 2006028684 A